# EUROPÄISCHE PATENTSCHRIFT

(11) **EP 2 062 512 B1**
(45) Veröffentlichungstag und Bekanntmachung des Hinweises auf die Patenterteilung: **22.06.2011**
(21) Anmeldenummer: 08105683.0
(22) Anmeldetag: 29.10.2008
(51) Int. Cl.: A47J 31/36

(54) **Kaffeemaschine mit Ventilanordnung**
Coffee machine with valve arrangement
Machine à café dotée d'un dispositif de ventilation

(30) Priorität: 26.11.2007 DE 102007056712
(43) Veröffentlichungstag der Anmeldung: 27.05.2009
(73) Patentinhaber: BSH Bosch und Siemens Hausgeräte GmbH, 81739 München (DE)
(72) Erfinder: Hauser, Andreas, 83370, Seeon (DE); Mathes, Anton, 83364, Neukirchen am Teisenberg (DE); Schneiderbauer, Gottfried, 84553, Halsbach (DE)

(56) Entgegenhaltungen:
- EP-A- 0 270 141
- EP-A- 0 561 741
- US-A- 2 014 325

## Beschreibung

Die Erfindung betrifft eine Kaffee-Zubereitungsmaschine mit einem Zulauf für die Zuleitung von Heißwasser und/oder Wasserdampf in eine Brühkammer und mit einem Ableitungskanal zum Beispiel in ein Restwasserbecken sowie mit einer zwischen dem Zulauf einerseits und der Brühkammer bzw. dem Ableitungskanal andererseits angeordneten Ventilanordnung, die mindestens ein Ventil umfasst und über eine Kopplung mit einer zwischen mehreren Funktionsstellungen beweglichen Brühkammer steuerbar ist.

Kaffee-Zubereitungsmaschinen, insbesondere Kaffee-Vollautomaten, können automatisiert diverse Kaffeevariationen produzieren und weisen dazu außer einer Brühkammer und den zu ihr führenden Leitungen und Erhitzern beispielsweise Ausläufe für (Heiß-)Wasser zur Teezubereitung und Wasserdampfdüsen zum Aufschäumen von Milch auf. Oftmals ist es zusätzlich notwendig, eine Ableitung für Heißwasser bzw. Wasserdampf vorzusehen, die in erster Linie vor dem Umschalten des Geräts von einer Funktion (z. B. Dampfzubereitung) zu einer anderen Funktion (z. B. Brühen) Restdampf bzw. Restwasser abführt. Außer zum Abbau von Überdruck ist dies insbesondere aus hygienischen bzw. Wartungsgründen notwendig. Um dabei einen reibungslosen Funktionsablauf zu gewährleisten, sind Schaltungs- bzw. Ventilanordnungen erforderlich.

Eine derartige automatisierte Anordnung ist in der EP 0561741 B1 beschrieben. Wasser, das einer Brühkammer zugeführt wurde und während eines Brühvorgangs nicht mehr benötigt wird, wird nach dem Brühvorgang mit Hilfe eines automatischen Ventils abgeleitet. Das Ventil ist an die Stellung der Brühkammer gekoppelt: In einer Brühstellung der Brühkammer wird Heißwasser über das Ventil in die Brühkammer geleitet. In einer anderen Stellung als der Brühstellung wird Restwasser abgeleitet. Zwar erfolgt eine Ableitung von Restwasser automatisch, doch ein Druckabbau beim Betrieb mit Wasserdampf ist mit diesem Ventil nicht möglich.

Alternativ kann ein manuell schaltbares Ventil verwendet werden, das Heißwasser bzw. Dampf je nach Schalterstellung in verschiedene Leitungen führt, die die unterschiedlichen Funktionen der Kaffee-Zubereitungsmaschine bedienen. Zum einen sind damit jedoch Bedienungsfehler nicht auszuschließen, zum anderen ist eine manuelle Betätigung nicht sehr komfortabel.

Die US-A-2 014 325 offenbart eine Kaffeemaschine, die über eine Ventilanordnung verfügt die über eine Nockenwelle gesteuert wird. Die Welle wird dabei von einem Elektromotor angetrieben.

Aufgabe der Erfindung ist es daher, eine verbesserte Kaffee-Zubereitungsmaschine bereitzustellen, die einfach in der Handhabung ist und die Fehlbedienungen so weit wie möglich ausschließt.

Diese Aufgabe wird bei der eingangs genannten Kaffee-Zubereitungsmaschine dadurch gelöst, dass die Ventilanordnung mehrere Ventile aufweist, die unabhängig voneinander betätigbar sind, je einen Stößel zum Betätigen aufweisen, der mit einem mit der Brühkammer gekoppelten Nocken auf einer Nockenschiene aktivierbar ist, und der Nocken im Betrieb linear bewegbar ist. Die Erfindung wendet sich also ab von einer Konstruktion, in der die Steuerung mehrerer Leitungswege in einem einzigen Ventil zusammengefasst wird. Denn konstruktionsbedingt kann ein Ventil nur wenige unterschiedliche Leitungswege ermöglichen. Sie verfolgt vielmehr das Prinzip, jedem Leitungsweg zur bzw. von der Brühkammer ein eigenes Ventil zuzuordnen, damit alle gewünschten Leitungspassagen zuverlässig geschaltet werden können. Da die Ventile in Abhängigkeit von der Brühkammerstellung, also automatisch, betätigt werden, ergibt sich für den Benutzer dennoch kein zusätzlicher Betätigungsaufwand.

In einer solchen Kaffee-Zubereitungsmaschine können beispielsweise Heißwasser und/oder Wasserdampf von einem oder mehreren Zuläufen durch die Ventilanordnung gesteuert in die Brühkammer, in den Ableitungskanal oder in andere Leitungen geleitet werden. Durch die Kopplung der Ventilanordnung mit den Funktionsstellungen der Brühkammer erfolgt diese gesteuerte Durchleitung automatisch in Abhängigkeit von der jeweils aktuellen Funktion der Kaffee-Zubereitungsmaschine. Da die Ventilanordnung mehrere, voneinander unabhängige Ventile aufweist, kann jeder Leitung, ob in die Brühkammer, in die Ableitung oder hin zu anderen Funktionsteilen, ein eigenes Ventil zugewiesen werden, das wiederum eigenständig aktivierbar ist. Es wird damit ein hohes Maß an Flexibilität erreicht und zugleich eine fehlerunanfällige Zuleitung von Heißwasser bzw. Wasserdampf zu den einzelnen Funktionsteilen der Kaffee-Zubereitungsmaschine gewährleistet.

Prinzipiell können die Ventile zwischen dem Zulauf auf der einen Seite und beliebigen Leitungen auf der anderen Seite angeordnet sein. Bevorzugt kann jedoch ein erstes Ventil zwischen dem Zulauf und der Brühkammer und ein zweites Ventil zwischen dem Zulauf und dem Ableitungskanal angeordnet sein. Dadurch können zum Beispiel zuerst Heißwasser in die Brühkammer geleitet und danach die im Zulauf verbliebenen Reste des Heißwassers über den Ableitungskanal abgeführt werden. Damit können Brühwasserreste nach einem Brühvorgang im Zulauf vermieden werden, so dass die Hygiene der Maschine verbessert ist. Brühwasserreste verfälschen außerdem bei einem erneuten Brühvorgang die Wassermenge und Temperatur des neu zubereiteten Getränks. Bei der Verwendung von nur zwei Ventilen ergibt sich zudem nur ein geringer Mehraufwand im Vergleich zum Stand der Technik.

Bei einer vorteilhaften Weiterbildung der Erfindung kann ein Ventil zwischen dem Zulauf und einer Dampfleitung angeordnet sein. Dadurch kann zum Beispiel eine Ventilanordnung mit drei Ventilen - für die Zuläufe zur Brühkammer, zum Ableitungskanal und zu einer Dampfleitung - realisiert werden. Die Dampfleitung kann beispielsweise in eine Dampfdüse zur Zubereitung von Milchschaum münden. Gerade für Anwendungen in Kaffee-Zubereitungsmaschinen, bei denen unterschiedliche Druck- und Temperaturverhältnisse für unterschiedliche Funktionen des Geräts - hier für die Bereitstellung von Dampf und von Brühwasser - benötigt werden, entfaltet die Erfindung besonders ihre Vorteile. Unter anderem den, dass Druck mit Hilfe der Ventilanordnung abgebaut werden kann, indem nach einer Funktion der Kaffee-Zubereitungsmaschine, die hohen Druck erfordert, eine Druckentspannung durch Öffnen eines Ventils hin zur Ableitung erfolgen kann. Andererseits kann durch Schließen möglichst vieler bzw. aller Ventile Druck aufgebaut werden, wie er gerade bei Wasserdampf-Anwendungen notwendig ist. Öffnen und Schließen der Ventile geschieht zudem automatisiert, so dass Fehlbedienungen ausgeschlossen werden können.

Prinzipiell können die Ventile so geschaltet sein, dass sie alle gleichzeitig geöffnet sind, d. h. dass (Heiß-)Wasser bzw. Dampf über alle Ventile gleichzeitig auf die Leitungen verteilt wird. Bevorzugt ist eine Kaffee-Zubereitungsmaschine, bei der im Betrieb jeweils mindestens eines der Ventile verschlossen ist, besonders bevorzugt, dass immer nur ein Ventil geöffnet ist. Durch die selektive Öffnung von Ventilen ist es möglich, Ventilstellungen zu kombinieren und dadurch beispielsweise verschiedene Funktionen der Kaffeemaschine, etwa das Brühen von Kaffee und eine Heißwasserabgabe für Teewasser parallel zu bedienen, während andere, im Rahmen dieser Funktionen nicht benötigte Kanäle durch Schließen des ihnen zugeordneten Ventils deaktiviert sind. In diesem Rahmen ist insbesondere eine elektrische bzw. elektronische Kopplung der Ventile mit der Position der Brühkammer zu bevorzugen, da hierdurch bei gleichzeitiger Abhängigkeit von dieser Position trotzdem verschiedene Ventil-Öffnungskonstellationen möglich sind.

In einer weiteren vorteilhaften Ausführungsform der Kaffeemaschine kann die Öffnung eines der Ventile jeweils mit mindestens einer Funktionsstellung der Brühkammer korrespondieren. Jeweils eine Kombination aus Öffnungs- und Schließstellungen der einzelnen Ventile korrespondiert also mit einer bestimmten Position bzw. einer bestimmten Funktion der Brühkammer. Ein einzelnes Ventil kann jedoch auch bei mehreren unterschiedlichen Funktionsstellungen der Brühkammer geöffnet sein. Zum Beispiel kann ein Ventil zwischen dem Zulauf und dem Ableitungskanal sowohl dann geöffnet werden, wenn die Brühkammer in einer Ausgangsposition ist, als auch dann, wenn sie sich in einer Zwischenstellung befindet, in der das Kaffeemehl komprimiert, aber noch nicht gebrüht wird. In beiden Fällen wird die Brühkammer nicht mit Heißwasser versorgt, so dass Restwasser oder Restdampf aus einem vorherigen Zubereitungsvorgang über den Ableitungskanal abgeleitet werden kann.

Als Ventil eignet sich grundsätzlich jede Art von mechanisch oder elektronisch betätigbaren Ventilen. Für eine mechanische Betätigung weisen die Ventile bevorzugt je einen Betätigungsstößel auf, der beispielsweise mit einem mit der Bewegung der Brühkammer gekoppelten Nocken aktiviert werden kann. Die Kopplung des Nockens mit der Bewegung der Brühkammer kann dadurch erfolgen, dass der Nocken auf einem Träger in Form einer Nockenscheibe oder Nockenschiene angebracht ist, die wiederum mit der Bewegung der Brühkammer in Verbindung stehen. Der Stößel wird bei der Aktivierung durch den Nocken verdrängt, wodurch sich das Ventil öffnet. Erfindungsgemäß ist der Nocken im Betrieb linear bewegbar, beispielsweise durch Anordnung auf einer Nockenschiene, die eine Hin- und Her-Bewegung vollzieht und dabei einen oder mehrere Nocken über die entsprechenden Stößel führt. Die Reihenfolge der Betätigung der Ventile kann dadurch eine andere sein als bei Verwendung einer Nockenscheibe. Typischerweise erfolgt sie nach einem Betätigungsschema Ventil 1 - Ventil 2 - Ventil 3 - Ventil 4 - Ventil 3 - Ventil 2 - Ventil 1.... Sie aktiviert also durch die Hin- und Herbewegung die Ventile in der Reihenfolge von Ventil 1 zu Ventil 4 und wird dann umgekehrt.

Prinzipiell ist die Reihenfolge der Aktivierung der Ventile also von der Form des Trägers der Nocken und ihrer Anordnung auf diesem Träger abhängig, sowie von der Art der Bewegung dieses Trägers. Gemäß einer weiteren Ausführungsform der Erfindung weist die Ventilanordnung eine Führungsvorrichtung zu einer selektiven Verhinderung einer Betätigung mindestens eines der Ventile auf. Mit ihrer Hilfe kann die an sich vorgegebene Reihenfolge aufgehoben werden. Beispielsweise kann eine bogenförmige Feder einen Nocken berührungsfrei am Stößel eines oder mehrerer Ventile vorbei führen. Bei der linearen Bewegung einer Nockenschiene in die Hinrichtung können beispielsweise in der oben beschriebene Reihenfolge Ventil 1 bis 4 nacheinander aktiviert werden, während bei der Bewegung in die Gegenrichtung der Nocken die Ventile 3 und 2 auslässt. Dadurch kann die Aktivierungsreihenfolge erzielt werden, wie sie im Rahmen der kreisförmigen Bewegung beschrieben wurde. Insbesondere kann daher eine solche Führungsvorrichtung bei linearen Bewegungen des Trägers von Vorteil sein, da lineare Bewegungen ohne Führungsvorrichtungen prinzipiell größere Einschränkungen in der Reihenfolge der Aktivierung mit sich bringen.

Das Prinzip der Erfindung wird im Folgenden anhand der Figuren beispielshalber noch näher erläutert. Es zeigen:
- Figur 1: Eine Schnittdarstellung einer Ventilanordnung,
- Figur 2: eine Draufsicht auf eine Ventilanordnung,
- Figur 3: eine seitliche Schnittansicht der Ventilanordnung in Figur 2 entlang einer Schnittlinie X-X',
- Figur 4: eine Schnittansicht einer Brüheinheit mit einer Brühkammer in einer ersten Funktionsstellung,
- Figur 5: eine Schnittansicht einer Brüheinheit mit einer Brühkammer in einer zweiten Funktionsstellung, und
- Figur 6: eine Schnittansicht einer Brüheinheit mit einer Brühkammer in einer dritten Funktionsstellung.

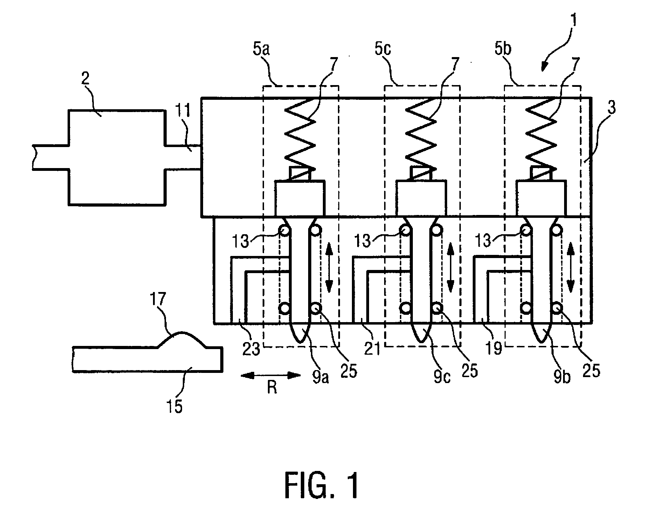

Figur 1 zeigt eine Ventilanordnung 1 einer erfindungsgemäßen Kaffee-Zubereitungsmaschine. Sie besteht aus einer Verteilungskammer 3, in die drei Ventile 5a, 5b, 5c eingebaut sind. Jedes der Ventile 5a, 5b, 5c weist je einen Stößel 9a, 9b, 9c, eine Feder 7, einen ersten O-Ring 13 und einen zweiten O-Ring 25 auf. Wird ein Stößel 9a, 9b, 9c eines Ventils 5a, 5b, 5c nach oben gedrückt, wird die jeweilige Feder 7 gestaucht und Flüssigkeit kann am jeweiligen ersten O-Ring 13 vorbei fließen. Der zweite O-Ring 25 dient der Abdichtung des Ventils in der Verteilungskammer 3.

In die Verteilungskammer 3 mündet ein Zulauf 11, der von einer Erhitzungsvorrichtung 2 her führt. Aus der Verteilungskammer 3 führen drei Kanäle, ein Ableitungskanal 19, eine Dampfleitung 21 und eine Brühleitung 23. Jeder Kanal ist an seinem kammerseitigen Ende von einem der Ventile 5a, 5b, 5c verschlossen. Das erstes Ventil 5a verschließt den Zugang zur Brühleitung 23, das zweite Ventil 5b ist dem Ableitungskanal 19 zugeordnet und das dritte Ventil 5c der Dampfleitung 21.

Auf derjenigen Seite der Ventilanordnung 1, aus der die Stößel 9a, 9b, 9c herausstehen, wird eine Nockenschiene 15 in linearer Richtung R hin- und herbewegt. Auf ihr ist ein Nocken 17 angebracht. Die Bewegung der Nockenschiene 15 ist mit der Bewegung einer Brühkammer (hier nicht mit dargestellt) gekoppelt. Dies bedeutet, dass eine Positionsänderung der Brühkammer eine Bewegung der Nockenschiene 15 in Richtung R bewirkt, wodurch der Nocken 17 die Stößel 9a, 9b, 9c der Ventile 5a, 5b, 5c aktiviert.

In der Erhitzungsvorrichtung 2 wird Wasser erhitzt und damit entweder auf Brühtemperatur oder auf Dampftemperatur gebracht. Das Heißwasser bzw. der Wasserdampf gelangt über den Zulauf 11 zum Aufschäumen von Milch in die Verteilungskammer 3. Von dort wird es bzw. er in Abhängigkeit von der Position der Brühkammer über eines der Ventile 5a, 5b, 5c entweder in die Brühleitung 23 oder in die Dampfleitung 21 oder in den Ableitungskanal 19 geleitet. Hierzu muss das jeweilige Ventil 5a, 5b, 5c geöffnet sein. Dies geschieht dadurch, dass die Nockenschiene sich in einer Position befindet, in der der Nocken 17 den Stößel 9a, 9b, 9c des betreffenden Ventils 5a, 5b, 5c nach oben drückt.

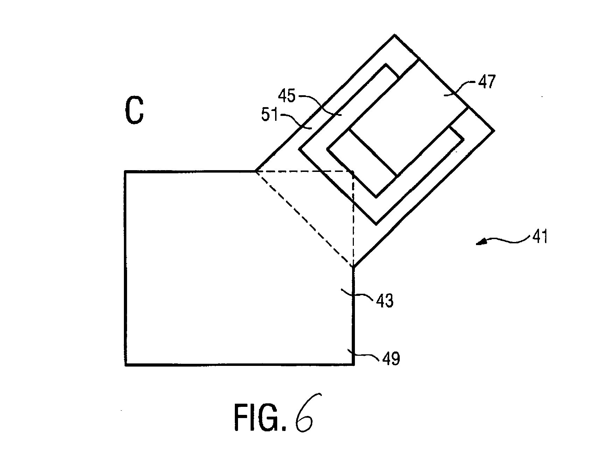

Möchte ein Benutzer der Kaffeemaschine beispielsweise eine Mischung aus Kaffee und Milchschaum zubereiten, wird zunächst in der Erhitzungsvorrichtung 2 Wasser so stark erhitzt, dass durch den Zulauf 11 Wasserdampf in die Verteilungskammer 3 gelangt. Da die Brühkammer bei der Zubereitung von Milchschaum nicht benötigt wird, befindet sie sich in einer Ausgangsposition (vgl. Figur 6). Damit korrespondiert eine Stellung der Nockenschiene 15, bei der der Nocken 17 den Stößel 9c des dritten Ventils 5c betätigt. Hierdurch ist das dritte Ventil 5c geöffnet, so dass der Wasserdampf über die Dampfleitung 21 zu einer Milchschaum-Düse (hier nicht dargestellt) geleitet wird.

Sobald die Zubereitung des Milchschaums abgeschlossen ist, wird die Zubereitung des Kaffees vorbereitet. Hierzu wird die Brühkammer mit Kaffeemehl gefüllt und dann von der Ausgangsposition in eine Zwischenposition (vgl. Figur 7) gebracht. Dadurch wird die Nockenschiene 15 so verschoben, dass der Nocken 17 den Stößel 9b des zweiten Ventils 5b betätigt. Nun ist das dritte Ventil 5c wieder geschlossen und das zweite Ventil 5b und damit der Ableitungskanal 19 geöffnet. Eventuell nicht verwendeter restlicher Wasserdampf wird damit über den Ableitungskanal 19 abgeleitet. Die Erhitzungsvorrichtung 2 heizt Wasser nur noch bis zu einer Brühtemperatur auf, so dass Heißwasser statt Dampf zubereitet wird. Jetzt kann der Brühvorgang initiiert werden. Die Brühkammer fährt in eine Brühposition (vgl. Figur 8). Sie verschiebt die Nockenschiene 15 so, dass der Nocken 17 den Stößel 9a des ersten Ventils 5a aktiviert. Das erste Ventil 5a ist geöffnet, während die anderen beiden Ventile 5b, 5c geschlossen sind. Das Heißwasser fließt damit ausschließlich in die Brühleitung 23 und wird dadurch in die Brühkammer geleitet.

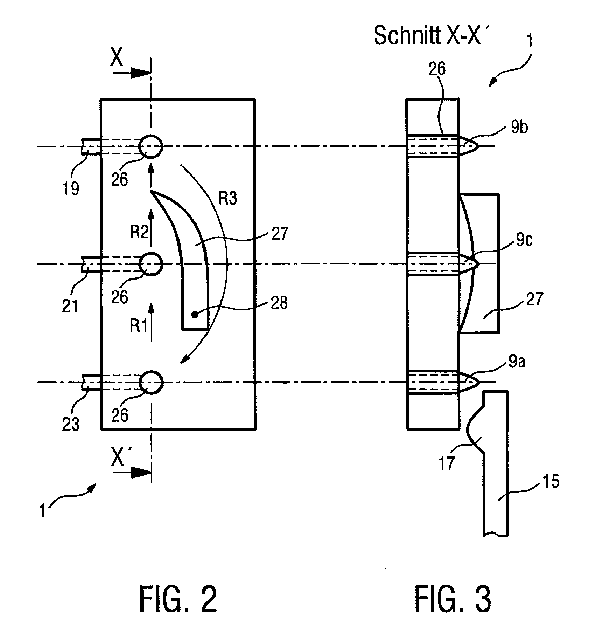

Figuren 2 und 3 zeigen eine spezielle Ausführungsform einer Ventilanordnung 1 in zwei verschiedenen Perspektiven, nämlich der Draufsicht (Figur 2) und einer seitlichen Schnittdarstellung entlang einer Schnittlinie X-X' (Figur 3). Aus Stößel-Öffnungen 26 der Ventilanordnung 1 ragen die Stößel 9a, 9b, 9c heraus. Sie können mit Hilfe eines Nockens 17 auf einer Nockenschiene 15 in die Ventilanordnung 1 hineingedrückt werden, um ein Ventil (nicht dargestellt) zu öffnen. In Figur 2 sind außerdem der Ableitungskanal 19, die Dampfleitung 21 und die Brühleitung 23 gezeigt, die jeweils aus der Ventilanordnung 1 seitlich links herausführen. Eine bogenförmige Feder 27 ist an einem Fixierpunkt 28 an der Ventilanordnung 1 einseitig befestigt und so positioniert, dass sie mit dem nicht fixierten Ende in eine Verbindungslinie der Stößel-Öffnungen 26 hineinragt. Der Fixierpunkt 28 liegt dagegen außerhalb dieser Verbindungslinie. Die bogenförmige Feder 27 dient dem Nocken 17 als Führungsvorrichtung, mit der selektiv die Betätigung des Stößels 9c und damit des Ventils, das der Dampfleitung 21 zugeordnet ist, verhindert werden kann. Der Nocken 17 beschreibt einen Weg, der in einer ersten Bewegung R₁ von Stößel 9a zu Stößel 9c und in einer zweiten Bewegung R₂ zu Stößel 9b führt. Beim Weg zurück von Stößel 9b in Richtung des Stößel 9a hindert die bogenförmige Feder 27 den Nocken 17 daran, wieder den Stößel 9c zu betätigen. Stattdessen wird der Nocken 17 in einer dritten Bewegung R₃ seitlich abgelenkt. Durch die bogenförmige Feder 27 wird also der Effekt erzielt, dass die Reihenfolge der Aktivierung der Stößel umgangen und eine Aktivierung des Stößels 9c bei der Rückwärtsbewegung des Nockens 17 verhindert wird.

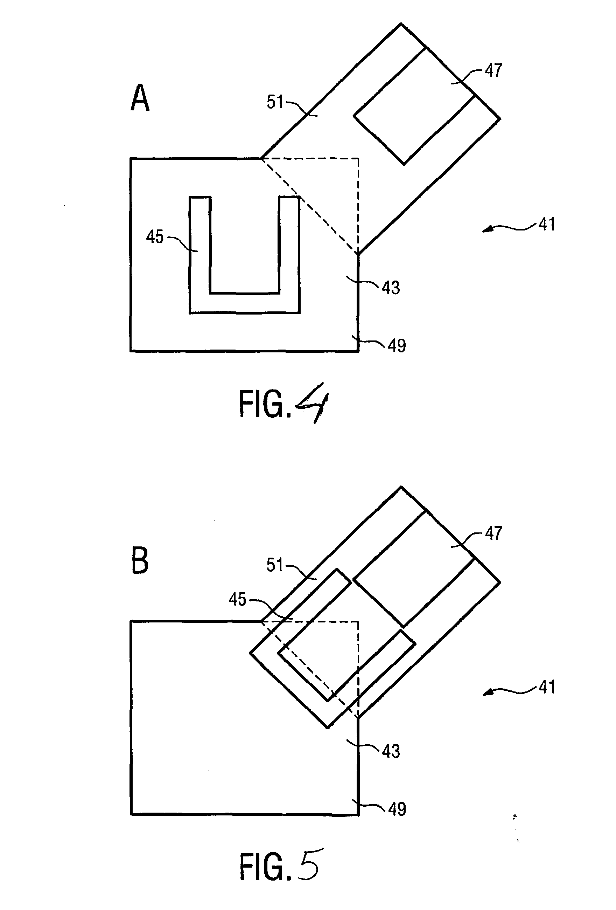

Figuren 4 bis 6 zeigen eine Brüheinheit 41 schematisch in drei unterschiedlichen Funktionsstellungen A, B, C einer Brühkammer 45.

Figur 4 zeigt eine Brüheinheit 41 in einer Funktionsstellung A, der Ausgangs- oder Beladeposition. Sie weist ein Brühgehäuse 43, eine Brühkammer 45 und einen Brühkolben 47 auf. Die schematisierte Brüheinheit 41 hat eine Schnittform, die sich aus der Kombination von zwei Rechtecken 49, 51 ergibt, wobei das zweite Rechteck 51 um einen Winkel von etwa 45° gedreht oberhalb des ersten Rechtecks 49 angestückt ist. Die Brühkammer ist in der Ausgangsposition im Bereich des ersten Rechtecks 49 positioniert, wo sie mit Kaffeemehl befüllt werden kann.

In Figur 5 befindet sich die Brühkammer 45 in Funktionsstellung B, der Zwischenposition. Sie ist nun im Bereich des zweiten Rechtsecks 51 der Brüheinheit 41 und setzt bereits leicht auf den Brühkolben 47 auf, wodurch in der Brühkammer 45 vorhandenes Kaffeemehl verdichtet werden kann.

In Figur 6 steht die Brühkammer 45 in Funktionsstellung C, der Brühstellung. Der Brühkolben 47 ist so weit wie möglich in die Brühkammer 45 eingeführt, so dass das Kaffeemehl nun verdichtet ist und Heißwasser in die Brühkammer 45 geleitet werden kann.

Korrespondierend mit den dargestellten Funktionsstellungen A, B, C sind die Ventile 5a, 5b, 5c (in Figuren 4 bis 6 nicht dargestellt) in verschiedenen Kombinationen aktiviert. So kann in Funktionsstellung A das Ventil 5c zur Dampfleitung 21 geöffnet sein, in Funktionsstellung B das Ventil 5b zum Ableitungskanal 19 und in Funktionsstellung C das Ventil 5a zur Brühleitung. Dadurch wird beispielsweise automatisch in der Brühstellung Heißwasser über die Brühleitung 23 in die Brühkammer 45 geführt.

### Bezugszeichenliste

- 1: Ventilanordnung
- 2: Erhitzungsvorrichtung
- 3: Verteilungskammer
- 5a, b, c: Ventil
- 7: Feder
- 9a, b, c: Stößel
- 11: Zulauf
- 13: O-Ring
- 15: Nockenschiene
- 17: Nocken
- 19: Ableitungskanal
- 21: Dampfleitung
- 23: Brühleitung
- 25: O-Ring
- 26: Stößel-Öffnung
- 27: gebogene Feder
- 28: Fixierpunkt
- 29: Nockenscheibe
- 31: Drehpunkt
- 33: Mittelpunkt
- 35, 37, 39: Nocken
- 41: Brüheinheit
- 43: Brühgehäuse
- 45: Brühkammer
- 47: Brühkolben
- 49, 51: Rechtecke
- A, B, C: Funktionsstellungen
- D: Drehbewegung
- R: lineare Bewegungsrichtung
- R₁: Bewegungsrichtung
- R₂: Bewegungsrichtung R₃ Bewegungsrichtung

## Patentansprüche

1. Kaffee-Zubereitungsmaschine mit einem Zulauf (11) für die Zuleitung von Heißwasser und/oder Wasserdampf, einer Brühkammer (45) und einem Ableitungskanal (19) sowie einer zwischen dem Zulauf (11) einerseits und der Brühkammer (45) bzw. dem Ableitungskanal (19) andererseits angeordneten Ventilanordnung (1) mit mindestens einem Ventil (5), die mit Hilfe einer Kopplung mit einer zwischen Funktionsstellungen (A; B; C) beweglichen Brühkammer (45) steuerbar ist, wobei die Ventilanordnung (1) mehrere Ventile (5a; 5b; 5c) aufweist, die unabhängig voneinander betätigbar sind, **dadurch gekennzeichnet, dass** die Ventile (5a; 5b; 5c) je einen Stößel (9a, 9b, 9c) zum Betätigen aufweisen, der mit einem mit der Brühkammer (45) gekoppelten Nocken (17; 35; 37; 39) auf einer Nockenschiene (15) aktivierbar ist, und dass der Nocken (17; 35; 37; 39) im Betrieb linear bewegbar ist.

2. Kaffee-Zubereitungsmaschine gemäß Anspruch 1, **dadurch gekennzeichnet, dass** ein erstes Ventil (5c) zwischen dem Zulauf (11) und der Brühkammer (45) und ein zweites Ventil (5a) zwischen dem Zulauf (11) und dem Ableitungskanal (19) angeordnet sind.

3. Kaffee-Zubereitungsmaschine gemäß Anspruch 1 oder 2, **dadurch gekennzeichnet, dass** ein Ventil (5b) zwischen dem Zulauf (11) und einer Dampfleitung (21) angeordnet ist.

4. Kaffee-Zubereitungsmaschine gemäß einem der vorhergehenden Ansprüche, **dadurch gekennzeichnet, dass** die Öffnung eines der Ventile (5a; 5b; 5c) jeweils mit mindestens einer Funktionsstellung (A; B; C) der Brühkammer (45) korrespondiert.

5. Kaffee-Zubereitungsmaschine gemäß einem der vorhergehenden Ansprüche, **gekennzeichnet durch** eine Führungsvorrichtung (27) zu einer selektiven Verhinderung einer Betätigung mindestens eines der Ventile (5a; 5b; 5c).

6. Kaffee-Zubereitungsmaschine gemäß Anspruch 5, **gekennzeichnet durch** eine bogenförmige Feder (27) als Führungsvorrichtung.

## Claims

1. Coffee machine with a feed (11) for feeding hot water and/or water steam, a brewing chamber (45) and an outlet channel (19) as well as a valve arrangement (1), which is arranged between the feed (11) on the one hand and the brewing chamber (45) or the outlet channel (19) on the other hand, with at least one valve (15) which is controllable with the help of a coupling with a brewing chamber (45) movable between functional settings (A; B; C), wherein the valve arrangement (1) comprises a plurality of valves (5a; 5b; 5c) which are actuable independently of one another, **characterised in that** the valves (5a; 5b; 5c) each comprise a plunger (9a, 9b, 9c) for actuation, which is activatable by a cam (17; 35; 37; 39), which is coupled with the brewing chamber (45), on a cam rail (15), and that the cam (17; 35; 37; 39) is linearly movable in operation.

2. Coffee machine according to claim 1, **characterised in that** a first valve (5c) is arranged between the feed (11) and the brewing chamber (45) and a second valve (5a) is arranged between the feed (11) and the outlet channel (19).

3. Coffee machine according to claim 1 or 2, **characterised in that** a valve (5b) is arranged between the feed (11) and a steam duct (21).

4. Coffee machine according to any one of the preceding claims, **characterised in that** the opening of one of the valves (5a; 5b; 5c) respectively corresponds with at least one functional setting (A; B; C) of the brewing chamber (45).

5. Coffee machine according to any one of the preceding claims, **characterised by** a guide device (27) for selective prevention of actuation of at least one of the valves (5a; 5b; 5c).

6. Coffee machine according to claim 5, **characterised by** a curved spring (27) as guide device.

## Revendications

1. Machine de préparation de café comprenant une arrivée (11) pour l'amenée d'eau chaude et/ou de vapeur d'eau, une chambre d'infusion (45) et un canal de dérivation (19) ainsi qu'un dispositif à vannes (1), disposé entre l'entrée (11) d'une part et la chambre d'infusion (45) resp. le canal de dérivation (19) d'autre part, comprenant au moins une vanne (5) qui est commandable à l'aide d'un couplage à une chambre d'infusion (45) déplaçable entre des positions de fonctionnement (A ; B ; C), le dispositif à vannes (1) présentant plusieurs vannes (5a, ; 5b ; 5c) qui sont commandables indépendamment l'une de l'autre, **caractérisée en ce que** les vannes (5a ; 5b ; 5c) présentent chacune un coulisseau (9a, 9b, 9c) pour la commande, lequel est activable sur une glissière de came (15) au moyen d'une came (17 ; 35 ; 37 ; 39) couplée à la chambre d'infusion (45), et **en ce que** la came (17 ; 35 ; 37 ; 39) est déplaçable linéairement pendant le fonctionnement.

2. Machine de préparation de café selon la revendication 1, **caractérisée en ce qu'**une première vanne (5c) est disposée entre l'arrivée (11) et la chambre d'infusion (45) et **en ce qu'**une deuxième vanne (5a) est disposée entre l'arrivée (11) et le canal de dérivation (19).

3. Machine de préparation de café selon la revendication 1 ou , **caractérisée en ce qu'**une vanne (5b) est disposée entre l'arrivée (11) et une conduite de vapeur (21).

4. Machine de préparation de café selon l'une quelconque des revendications précédentes, **caractérisée en ce que** l'ouverture de l'une des vannes (5a ; 5b ; 5c) correspond respectivement à au moins une position de fonctionnement (A ; B ; C) de la chambre d'infusion (45).

5. Machine de préparation de café selon l'une quelconque des revendications précédentes, **caractérisée par** un dispositif de guidage (27) pour un empêchement sélectif d'une commande au moins de l'une des vannes (5a ; 5b ; 5c).

6. Machine de préparation de café selon la revendication 5, **caractérisée par** un ressort arqué (27) en tant que dispositif de guidage.
